(19) Europäisches Patentamt

European Patent Office

Office européen des brevets

(11) **EP 1 284 475 A2**

(12) **EUROPEAN PATENT APPLICATION**

(43) Date of publication:
**19.02.2003 Bulletin 2003/08**

(51) Int Cl.$^7$: **G07G 1/00**

(21) Application number: **02018440.4**

(22) Date of filing: **16.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **17.08.2001 US 313114 P
16.08.2002 US 222199**

(71) Applicant: **Premark FEG L.L.C.
Wilmington, Delaware 19801 (US)**

(72) Inventor: **Bennard, Thomas John
Mendon, Massachusetts 01756 (US)**

(74) Representative: **Vetter, Ewald Otto et al
Meissner, Bolte & Partner
Anwaltssozietät GbR
(Depotstrasse 5 1/2,
86199 Augsburg),
Postfach 10 26 05
86016 Augsburg (DE)**

(54) **Scale system with frequent shopper display and related methods**

(57) A food product scale system within a store displays frequent shopper pricing information, such as a frequent shopper total price and a frequent shopper savings amount over a normal total price, during weighing of food products having associated frequent shopper pricing.

Fig. 1

EP 1 284 475 A2

**Description**

CROSS-REFERENCE

This application claims the benefit of provisional application serial No. 60/313,114 filed August 17, 2001.

TECHNICAL FIELD

The present application relates generally to scales used in deli, produce, service meat and bakery departments of supermarkets, groceries and other stores and, more particularly, to a scale including a frequent shopper display.

BACKGROUND

Food product scales used in groceries typically include a display which faces the consumer and displays the per unit price of the deli or produce product being purchased along with the weight and the total price as the food product is weighed. Such scales also print a label that is then applied to the food product. Many groceries and supermarkets have established "frequent shopper" programs in which promotional incentives (reduced pricing) for shoppers are provided based upon the shopper's participation in the program. In the deli and produce departments the frequent shopper discount/reduced price is typically printed on the label which is applied to the food product. However, the shopper does not see the frequent shopper price until the food product has been wrapped and handed to the shopper at which point the shopper is unlikely to modify his purchasing behavior based upon the frequent shopper price. Further, many shoppers may not even look at the label, instead assuming the price they will pay at check-out will be the price that was displayed on the scale display.

Accordingly, it would be advantageous to provide a scale system that is more effective in affecting shopper purchasing behavior.

As used herein the term "frequent shopper" encompasses any type of shopper incentive program, sale or other promotion in which special pricing is provided by a store to certain customers who participate in the program as identified by some type of member ID such as a program card. An alternative term commonly used in the industry for such programs is the term customer loyalty program.

SUMMARY

In one aspect, a food product scale system adapted for frequent shopper incentive includes at least one consumer display, a label printer, and a controller for controlling information displayed by the consumer display and for controlling information printed on labels by the label printer. During a weighing operation of a food product having associated frequent shopper pricing, the controller effects display of at least a normal total price on the consumer display, and the controller effects display of at least one of a frequent shopper total price and a frequent shopper savings amount on the consumer display.

In a further aspect, a food product scale system within a store and adapted for frequent shopper incentive comprises a weighing mechanism for weighing food products and producing weight indicative signals, at least one consumer display facing a consumer ordering area within the store, a label printer and a controller. The controller is connected for receiving weight indicative signals, controlling information displayed by the at least one consumer display and controlling information printed on labels by the label printer. During a weighing operation of a given food product the controller operates to determine if the given food product has associated frequent shopper pricing. If the given food product is determined to have associated frequent shopper pricing the controller (1) identifies a normal price per unit weight and a frequent shopper price per unit weight for the given food product, (2) determines a normal total price and a frequent shopper total price for the given food product, (3) determines a frequent shopper savings amount as a difference between the normal total price and the frequent shopper total price, and (4) effects display of the normal total price on a particular portion of the consumer display and effects display of at least one or both of the frequent shopper total price and a frequent shopper savings amount on another portion of the consumer display. If the given food product is determined not to have associated frequent shopper pricing the controller (1) identifies the normal price per unit weight for the given food product, (2) determines normal total price based upon weight of the given food product, (3) effects display of the normal total price on the particular portion of the at least one consumer display and effects display of an advertising message on the another portion of the consumer display, the advertising message being for a product that is different than the given product.

In another aspect, a promotional method for use with a scale including a first consumer display, a label printer, and a controller for controlling information displayed by the first display and for controlling information printed on labels by the label printer is provided. The method involves the steps of: (a) operatively connecting a second consumer display for communication with the scale such that information displayed by the second display is controlled by the controller; (b) during a weighing operation of a given food product: (i) displaying on one of the first consumer display and the second consumer display at least a normal per unit price and a normal total price based upon weight of the given food product, and (ii) displaying on the other of the first consumer display and the second consumer display at least a frequent shopper total price based upon weight of the given product and a savings amount representing a difference between the normal total price and the frequent shopper total price is also displayed on the other of the first consumer display and the second consumer display.

In another aspect, a food product scale system adapted for frequent shopper incentive includes a first consumer display, a second consumer display, a label printer, and a controller for controlling information displayed by the first display and the second display and for controlling information printed on labels by the label printer. During a weighing operation of a food product having associated frequent shopper pricing, the controller effects display of at least a normal total price on one of the first consumer display and the second consumer display, and the controller effects display of at least a frequent shopper total price on the other of the first consumer display and the second consumer display.

In another aspect, a method of modifying a food product scale within a store is provided where the food product scale includes a first consumer display facing consumers, a label printer and a controller for controlling information displayed by the first consumer display and for controlling information printed on labels by the label printer. The method involves the steps of: (a) providing a second consumer display; (b) operatively connecting the second consumer display for communication with the food product scale, the second consumer display faces consumers; (c) modifying the controller configuration to control information displayed on the second consumer display such that during a weighing operation of a food product having associated frequent shopper pricing, the controller effects display of at least one or both of a frequent shopper total price and a frequent shopper savings amount by the second consumer display.

BRIEF DESCRIPTION OF THE DRAWINGS

    Fig. 1 is schematic of a typical deli;
    Fig. 2 is a schematic of a scale;
    Fig. 3 is a front elevation of one embodiment of a scale;
    Fig. 4 is a front elevation of another embodiment of a scale.
    Fig. 5 is a front elevation of another embodiment of a scale; and
    Fig. 6 is a front elevation of another embodiment of a scale.

DETAILED DESCRIPTION

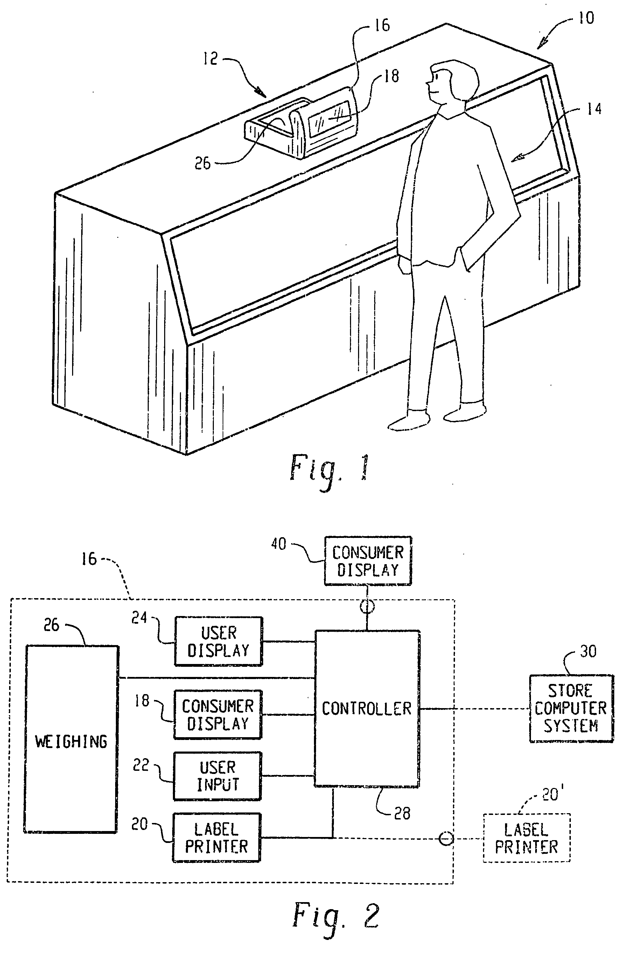

Referring to Fig. 1, an exemplary counter/reach-in refrigerator 10 of a deli, service meat or bakery section of a supermarket is shown. Area 12 indicates a store employee/scale user position behind the unit 10 and area 14 indicates the typical consumer/shopper position in front of the unit 10 where the consumer places an order. A food product scale 16 is shown positioned atop the unit 10 and includes a consumer display 18 facing the consumer area 12 for viewing by consumers during weighing and labeling of a food product.

As shown in Fig. 2 the exemplary food product scale 16 includes consumer display 18, label printer 20 (with associated supply of labels and print head), user input device 22 (such as input keys for identifying the food product to be weighed), a user display 24 (located opposite the consumer display 18 so as to face the user), and weighing mechanism 26 (such as a load cell). A controller 28, such as a processor based unit with associated interface circuitry, is connected for receiving weight signals from the weighing mechanism 26 and input signals from the user input device 22, and is also connected for controlling information displayed by the user display 24 and consumer display 18 as well as information printed on labels by the printing mechanism 20. The displays 18 and 24 may be of any suitable type such as LED, LCD, CRT, plasma discharge or others. In the illustrated scale 16 the label printer 20 is formed integral with the other components, but other scales may include a label printer 20' separate from, but connected to the other components. The scale controller 28 is typically connected to a store computer 30 for receiving pricing information for food products, the store computer 30 maintaining one or more databases of such information. The communication link between the controller 28 and the computer 30 may be a hard-line link, may be a wireless link such as RF or infrared, or may be formed by combinations of the two. Rather than a store computer, the computer 30 might also be a regional or chain-wide computer. The scale controller 28 may include its own database or databases of pricing and label information as well.

It is recognized that variations on such a scale construction are possible. For example, self-service scales such as those more often used in produce departments may include only a consumer display 18 on the same side of the scale as the weighing station.

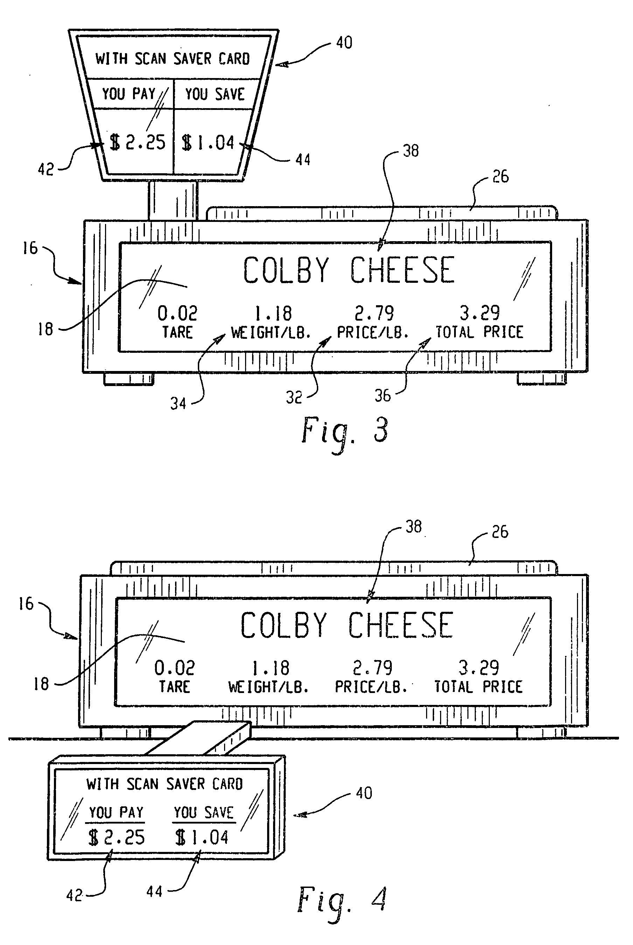

Referring to Fig. 3, during a weighing operation of a given food product the consumer display 18 is typically controlled to display the normal per unit price 32 of the food product, the total weight 34 of the food product and the normal total price 36 of the food product. The name and/or brand of the food product may also be displayed at 38.

With the advent of frequent shopper programs certain items in a given supermarket/grocery/store are given reduced pricing for those consumers participating in the program. Program participation typically involves registering and receiving a card which can be scanned at check-out to track consumer purchasing behavior. If a consumer participates in the frequent shopper program and has his/her card scanned at check-out, the consumer will receive the frequent shopper price, if applicable at that time, for any food product purchased.

In the past, scales 16 have printed frequent shopper price information on labels that are then applied to the food product once packaged. The frequent shopper information may be obtained by the scale 16 from the store computer 30 or may be incorporated within a database of the scale. However, as previously explained this label technique does not facilitate modification of consumer purchasing behavior.

Accordingly, and as shown in Figs. 2 and 3, in accordance with one advantageous arrangement, another consumer display 40 is added and may be of any suitable type such as LED, LCD, CRT plasma discharge or others. The consumer display 40 is then used to provide frequent shopper pricing information to consumers, such as the frequent shopper total price 42 and the amount saved 44 as compared with the normal total price 36. In particular, during a weighing operation of a food product having associated frequent shopper pricing the controller 28 identifies a normal price per unit weight and a frequent shopper price per unit weight for the food product, determines a normal total price and a frequent shopper total price based upon weight of the food product, determines a frequent shopper savings amount as a difference between the normal total price and the frequent shopper total price, and effects display of at least the normal total price on the consumer display 18 and effects display of the frequent shopper total price and the frequent shopper savings amount on the consumer display 40. The normal price per unit weight and frequent shopper price per unit weight may be identified by retrieval from one or more databases based upon a product identifying number, such as a price look-up (PLU) number that is input by the scale operator via the user input 22, where the database(s) may be internal to the scale or external to the scale. The printing of normal price information and frequent shopper price information on a label will typically also be effected by the controller 28, with the label then being applied to food product after it is packaged.

The technique used to calculate the frequent shopper total price may be as simple as multiplying the weight of the product, as indicated by the weighing mechanism, by the frequent shopper price per unit weight. However, frequent shopper total price determination within the scale 16 by the controller 28 may also be matched to the frequent shopper price calculation algorithm used at the point of sale (e.g. at the customer checkout terminals within the store). In particular, one of the most common point of sale frequent shopper total price calculation techniques currently used is an IBM algorithm as follows:

Capture NTP from bar code

↓

NTP x 100 = Results1

↓

NPPUW/2 = Results2

↓

(Results1 + Results2)/NPPUW = Weight

↓

FSPPUW x Weight = Result3

↓

Result3 / 100 = Result4

↓

Result4 Remainder (2 digits to the right of the decimal) + Result4 Remainder = Result 5

↓

If Result5 ≥ 100, Result4 is rounded up, if not Result4 remains unchanged

↓

Result4/100 = FSTP

In the above NTP = normal total price, NPPUW = normal price per unit weight, FSPPUW = frequent shopper price per unit weight and FSTP = frequent shopper total price. Following this algorithm the scale controller 28 may calculate the frequent shopper total price, with the first "capture" step simply being replaced by a step of calculating the normal total price (NTP). Rounding rules may also be used in connection with the steps of calculating Results2 and/or Weight.

Regardless of the calculation technique used, the frequent shopper total price calculation and frequent shopper savings amount calculation may be performed repeatedly during the weighing operation of a given food product, with the display of frequent shopper total price and frequent shopper savings amount also being updated repeatedly to account for changes in weight of the given product. In this manner the consumer visually sees the frequent shopper savings amount increase as more of the food product is requested and weighed, which may lead to larger purchases by consumers participating in the frequent shopper program.

The consumer display 40 may be retrofitted to existing scales 16 by simply hard-wire connecting the display 40 to an available interface of the scale controller 28 so as to be controlled by the scale controller 28, and modifying (reprogramming etc.) the scale controller 28 to effect display of the frequent shopper pricing information on the display 40. Alternatively, the consumer display 40 may be connected via a wireless link to the scale 16, such link being "direct" (e.g., via an RF transmitter or transceiver in the scale and connected to the scale controller 28) or "indirect" (e.g., via an RF transmitter or transceiver connected to the store computer system 30). The controller 28 could receive and store frequent shopper information from the store computer system 30 on a regular basis or could communicate with the store computer system 30 each time an item is weighed to see if frequent shopper data is available for that item.

The consumer display 40 may be mounted in marquee fashion as shown in Fig. 3, above the scale 16, but might also be mounted below the scale on the front of a unit 10 as shown in Fig. 4. The consumer display 40 could also be mounted more remotely from the scale 16 (e.g., above or below a product in counter 10 or on a wall behind the counter 10).

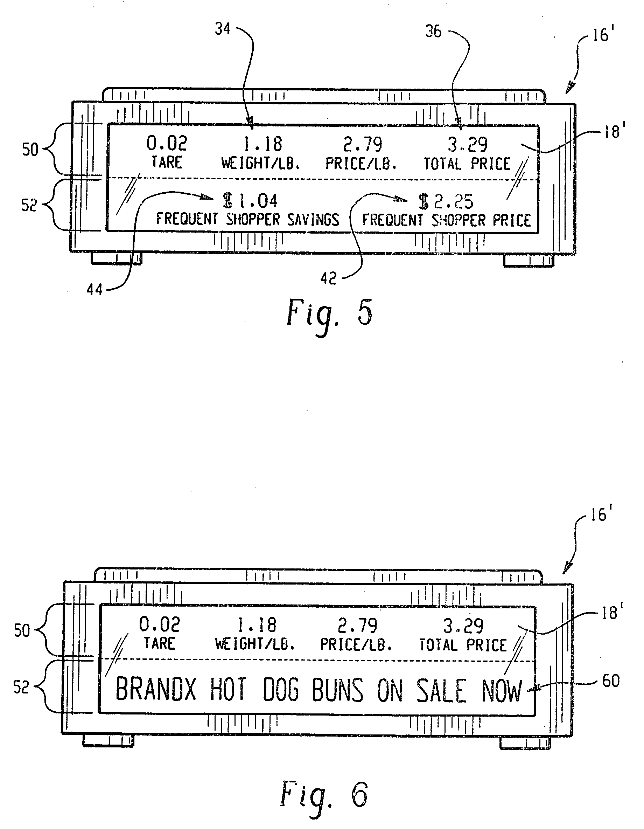

In another embodiment shown in Fig. 5 a scale 16' includes a more advanced consumer display 18' capable of displaying both standard price information (such as normal price per unit weight 34 and normal total price 36) and incentive program price information (such as frequent shopper total price 42 and frequent shopper savings amount 44). In the illustrated example the display 18' is segmented into upper 50 and lower portions 52. A scale is also possible with a single marquee type consumer display for displaying the information illustrated in Fig. 5.

As shown in Fig. 6, in circumstances where the item being weighed is not on frequent shopper special, as well as during periods of non-use of the scale 16', the display 18' may be controlled to display advertising or cross-marketing information 60. For example, during a purchase of hot dogs a consumer could be advised of a special on a particular brand of hot dog buns. As another example, where hamburger is being weighed a consumer could be advised that a purchase of 2 pounds or more entitles them to a certain percentage off on a product such as baked beans. Many other examples are possible, with the focus most often being on display of an advertising message for a product that is different than the product being weighed so that an incentive is created in the consumer to also purchase the different product. It is recognized that the separate consumer display 40 in the embodiment of Fig. 3 could be similarly used for advertising and cross-marketing when not in use for display of frequent shopper pricing information.

Store and/or program incentive logos could also be incorporated into displays of frequent shopper price information.

Although the invention has been described above in detail referencing the preferred embodiments thereof, it is recognized that various changes and modifications could be made without departing from the spirit and scope of the invention, including both narrowing and broadening variations of the appended claims.

**EP 1 284 475 A2**

**Claims**

1.  A food product scale system within a store and adapted for frequent shopper incentive, the food product scale system comprising:

    a weighing mechanism for weighing food products and producing weight indicative signals;
    at least one consumer display facing a consumer ordering area within the store;
    a label printer; and
    a controller for receiving weight indicative signals, controlling information displayed by the at least one consumer display and controlling information printed on labels by the label printer, during a weighing operation of a food product having associated frequent shopper pricing the controller (i) identifies a normal price per unit weight and a frequent shopper price per unit weight for the food product, (ii) determines a normal total price and a frequent shopper total price based upon weight of the food product, (iii) determines a frequent shopper savings amount as a difference between the normal total price and the frequent shopper total price, and (iv) effects display of at least each of the normal total price, the frequent shopper total price and the frequent shopper savings amount on the at least one consumer display.

2.  The food product scale system of claim 1 wherein the at least one consumer display comprises a first consumer display and a second consumer display, and the controller effects display of the normal total price on the first consumer display and effects display of the frequent shopper total price and the frequent shopper savings amount on the second consumer display.

3.  The food product scale system of claim 1 or 2 wherein the normal price per unit weight and the frequent shopper price per unit weight are retrieved from a database within a food product scale that incorporates the weighing mechanism, label printer and controller.

4.  The food product scale system of at least one of the preceding claims wherein the controller operates to repeatedly determine each of the normal total price, frequent shopper total price and frequent shopper savings amount during the weighing operation to reflect changes in weight of the food product, and the controller further operates to repeatedly effect update of display of normal total price, frequent shopper total price and frequent shopper savings amount.

5.  A food product scale system within a store and adapted for frequent shopper incentive, the food product scale system comprising:

    a weighing mechanism for weighing food products and producing weight indicative signals;
    at least one consumer display facing a consumer ordering area within the store;
    a label printer; and
    a controller for receiving weight indicative signals, controlling information displayed by the at least one consumer display and controlling information printed on labels by the label printer, during a weighing operation of a given food product the controller operates to:

    (i) determine if the given food product has associated frequent shopper pricing, and

    (a) if the given food product has associated frequent shopper pricing the controller (1) identifies a normal price per unit weight and a frequent shopper price per unit weight for the given food product, (2) determines a normal total price and a frequent shopper total price for the given food product, (3) determines a frequent shopper savings amount as a difference between the normal total price and the frequent shopper total price, and (4) effects display of the normal total price on a particular portion of the consumer display and effects display of at least one or both of the frequent shopper total price and a frequent shopper savings amount on another portion of the consumer display;
    (b) if the given food product does not have associated frequent shopper pricing the controller (1) identifies the normal price per unit weight for the given food product, (2) determines normal total price based upon weight of the given food product, (3) effects display of the normal total price on the particular portion of the at least one consumer display and effects display of an advertising message on the another portion of the consumer display, the advertising message being for a product that is different than the given product.

**6.** The food product scale system of claim 5 wherein the at least one consumer display comprises both a first consumer display and a second consumer display, the particular portion of the at least one consumer display comprises the first consumer display and the another portion of the at least one consumer display comprises the second consumer display.

**7.** A promotional method for use with a scale including a first consumer display, a label printer, and a controller for controlling information displayed by the first consumer display and for controlling information printed on labels by the label printer, the method comprising the steps of:

(a) operatively connecting a second consumer display for communication with the scale such that information displayed by the second consumer display is controlled by the controller;
(b) during a weighing operation of a given food product:

(i) displaying on one of the first consumer display and the second consumer display at least a normal per unit price and a normal total price based upon weight of the given food product, and
(ii) displaying on the other of the first consumer display and the second consumer display at least both (1) a frequent shopper total price based upon weight of the given product and (2) a savings amount representing a difference between the normal total price and the frequent shopper total price.

**8.** A food product scale system adapted for frequent shopper incentive promotion includes:

a first consumer display;
a second consumer display;
a label printer; and
a controller for controlling information displayed by the first consumer display and the second consumer display and for controlling information printed on labels by the label printer, during a weighing operation of a food product having associated frequent shopper pricing the controller effects display of at least a normal total price on one of the first consumer display and the second consumer display and the controller effects display of at least a frequent shopper total price on the other of the first consumer display and the second consumer display.

**9.** The food product scale system of claim 8 wherein the second consumer display displays the frequent shopper total price and the second consumer display comprises a marquee type display positioned above a scale housing.

**10.** The food product scale system of claim 8 or 9 wherein the controller is operatively connected to a store computer for receiving normal and frequent shopper pricing information therefrom.

**11.** The food product scale system of at least one of claims 8 to 10 wherein the second consumer display displays the frequent shopper total price and the second consumer display comprises a display mounted beneath a scale housing.

**12.** The food product scale system of at least one of claims 8 to 11 wherein the second consumer display displays the frequent shopper total price and also displays a savings amount defined by the difference between the normal total price and the frequent shopper total price.

**13.** The food product scale system of at least one of claims 8 to 12 wherein during a weighing operation of a food product that does not have associated frequent shopper pricing the controller effects display of an advertising message on the second consumer display, the advertising message being for a product that is different than the weighed food product.

**14.** A method of modifying a food product scale within a store where the food product scale includes a first consumer display facing consumers, a label printer and a controller for controlling information displayed by the first consumer display and for controlling information printed on labels by the label printer, the method comprising the steps of:

(a) providing a second consumer display;
(b) operatively connecting the second consumer display for communication with the food product scale, and positioning the second consumer display to face consumers;
(c) modifying the controller configuration to further control information displayed on the second consumer display such that during a weighing operation of a food product having associated frequent shopper pricing

the controller effects display of at least one or both of a frequent shopper total price and a frequent shopper savings amount by the second consumer display.

15. The method of claim 14 wherein the second consumer display is mounted above the food product scale in marquee fashion.

16. The method of claim 14 wherein the second consumer display is mounted below the food product scale.

17. A food product scale system adapted for frequent shopper incentive, the scale system comprising:

at least one consumer display;
a label printer; and
a controller for controlling information displayed by the at least one consumer display and for controlling information printed on labels by the label printer, during a weighing operation of a food product having associated frequent shopper pricing, the controller effects display of at least a normal total price on the consumer display and the controller effects display of at least one of a frequent shopper total price and a frequent shopper savings amount on the at least one consumer display.

18. The food product scale system of claim 17 wherein the at least one consumer display comprises a first consumer display integrated within a scale housing and a second consumer display, and the controller effects display of the normal total price on the first consumer display and effects display of at least one of the frequent shopper total price and the frequent shopper savings amount on the second consumer display.

19. The food product scale system of claim 17 or 18 wherein the controller effects display of both the frequent shopper total price and the frequent shopper savings amount.

Fig. 1

Fig. 2

*Fig. 3*

*Fig. 4*

Fig. 5

Fig. 6